# EUROPEAN PATENT SPECIFICATION

(11) **EP 0 553 223 B1**
(45) Date of publication and mention of the grant of the patent: **08.05.1996**
(21) Application number: 91919250.0
(22) Date of filing: 14.10.1991
(51) Int. Cl.: C09D 10/00

(54) **CORRECTION FLUID SYSTEM AND USE THEREOF**
KORREKTURFLÜSSIGKEITSSYSTEM UND VERWENDUNG DESSELBEN
SYSTEME DE FLUIDE CORRECTEUR ET SON UTILISATION

(30) Priority: 17.10.1990 GB 9022548; 21.12.1990 GB 9027868
(43) Date of publication of application: 04.08.1993
(73) Proprietor: THE GILLETTE COMPANY, Boston, Massachusetts 02199 (US)
(72) Inventor: JOHNSTON, Richard, Berkshire RG16 1DZ (GB); ALEXIOU, Michael, Middlesex TW2 5JL (GB); BAINES, Frederick, Charles 4 Yew Tree Close, Bedfordshire LU6 2ED (GB)
(74) Representative: Lerwill, John
(86) International application number: GB9101782
(87) International publication number: WO9207040

(56) References cited:
- DE-A- 2 745 735
- FR-A- 576 209
- GB-A- 2 058 110
- WORLD PATENTS INDEX LATEST Derwent Publications Ltd., London, GB; AN 90-152408 (20) & JP,A,2 097 574

## Description

This invention is concerned with correction fluids, that is white paints which are used by typists and others to cover typing, writing or drawing errors and which, when dry, can be typed, written or drawn over, and with the use of a correction fluid system.

Correction fluids essentially comprise an opacifying agent, usually a white pigment, such as titanium dioxide, a polymeric binder, and a liquid medium in which the binder is soluble or dispersible. The composition often also contains a dispersing agent. Such compositions are of two kinds. In the first kind the liquid medium is a volatile organic solvent, such as a chlorohydrocarbon, a chlorofluorocarbon or a petroleum-based hydrocarbon, and in the second kind the liquid medium is water-based, for example a water/ethanol mixture.

Compositions containing organic solvents have the advantage that they are relatively quick drying. Thus a commercially available correction fluid containing 1,1,1-trichloroethane as the liquid medium typically takes 20-25 seconds to dry. On the other hand, the use of such organic liquids is now considered to be undesirable for environmental reasons and because of the risk of abuse.

Compositions containing water-based liquid media are not subject to the latter disadvantages, but they take a relatively long time to dry. Thus, a commercially available correction fluid containing aqueous ethanol as the liquid medium typically takes at least 40 seconds to dry. For a professional typist this is too long and represents an unacceptable interruption of the work pattern.

We have now developed correction fluids which contain water as the liquid medium and which can be cured rapidly and written over in a very short time; this combination of properties is obtained by the use of water-soluble or dispersible polymers which can be cured or cross-linked very rapidly, as the polymeric binder.

According to one aspect of the invention, there is provided a correction fluid system which comprises
(a) a correction fluid comprising an aqueous dispersion of an opacifying agent and a water-soluble or dispersible curable polymer as a binder for the opacifying agent, and separately therefrom (as herein defined),
(b) a curing agent which can cure the polymeric binder so as to solidify a coating of the correction fluid within 60 seconds or less of the initiation of curing; wherein the polymeric binder is selected from:
   (1) polyvinyl alcohol,
   (2) copolymers comprising a major proportion of vinyl alcohol units and a minor proportion of units of a copolymerisable monomer,
   (3) (a) guar gum and
      (b) modified guar gums,
   (4) carboxymethyl cellulose and derivatives thereof,
   (5) iota- or kappa- carrageenan polymers,
   (6) alginic acid polymers,
   (7) polymers based on acrylic or methacrylic acid or polymers containing a plurality of pendant carboxylic acid groups,
   (8) polystyrene sulphonic acid, and
   (9) polyethylene oxide,
   and the curing agent used with said polymeric binder is selected respectively from (using the same numbering as for the polymers):

(1), (2) and (3)(a) and (b): borax or other salt of boric acid, Congo red, or sodium silicate,
(3)(b) and (4)-(8) inclusive: a polyvalent metal salt, and
(9): a multifunctional carboxylic acid.

By "separately therefrom", it is meant that the curing agent is not in molecular contact with the curable polymer in the fluid.

In using the correction fluid system according to the invention, the correction fluid is applied in the normal way to the area which is to be covered and the fluid covering the area is exposed to the curing agent to initiate cure. The preferred way of initiating curing is to press a solid mass of the curing agent onto the treated area. Once exposed to the curing agent, the correction fluid solidifies in 60 seconds or less, and preferably in 30 seconds or less, and the coated area is available for re-typing, writing or drawing immediately. In preferred embodiments of the invention, such solidification takes place substantially instantaneously.

According to another aspect of the invention, there is provided a method of obscuring markings on a surface, which comprises applying a coating of a correction fluid comprising an aqueous dispersion of an opacifying agent and a water-soluble or dispersible curable polymeric binder therefor, to that part of the marked surface it is wished to obscure, and then exposing the liquid coating to a curing agent which can cure the polymeric binder so as to solidify the coating within 60 seconds or less of the initiation of curing; wherein the polymeric binder is selected from the group consisting of:
(1) polyvinyl alcohol,
(2) copolymers comprising a major proportion of vinyl alcohol units and a minor proportion of units of a copolymerisable monomer,
(3) (a) guar gum and
   (b) modified guar gums,
(4) carboxymethyl cellulose and derivatives thereof,
(5) iota- and kappa- carrageenan polymers,
(6) alginic acid polymers,
(7) polymers based on acrylic or methacrylic acid or polymers containing a plurality of pendant carboxylic acid groups,
(8) polystyrene sulphonic acid, and
(9) polyethylene oxide;
and said curing agent is selected respectively from the group consisting of (using the same numbering as for the polymers):
(1), (2) and (3)(a) and (b): borax or other salt of boric acid, Congo red, or sodium silicate,
(3)(b) and (4)-(8) inclusive: a polyvalent metal salt, and
(9): a multifunctional carboxylic acid.

The correction fluid system according to the invention preferably also comprises means for applying the correction fluid to a surface to be coated therewith, such as a brush, and the curing agent is preferably in the form of a solid mass mounted in a holder which can be handled. The correction fluid is preferably contained in a container with a removable closure and the solid mass of the curing agent is preferably mounted on the outside of the container or the closure. The brush which may be used for applying the correction fluid is preferably mounted by means of its handle on the inside of the closure.

The proportions of the ingredients of the correction fluid are not particularly critical. The amount of opacifying agent should be as high as is compatible with a paintable consistency in order to get good coverage and about 50% by weight is typically used. Preferred opacifying agents are pigments, such as titanium dioxide.

The amount of polymeric binder is suitably from 0.2 to 8% by weight, a preferred amount being 1 to 2% by weight. The balance of the composition is water and any optional ingredients which it is wished to include, such as a dispersant. A preferred correction fluid composition is, therefore, as follows (by weight):

| | |
|---|---|
| titanium dioxide (pigment grade) | 50% |
| polymeric binder | 1% |
| water | 49% |

The various types of polymeric binders for use in accordance with the invention will now be described in more detail.

### (1) Polyvinyl alcohol.

Neither the molecular weight nor the degree of hydrolysis of the polyvinyl alcohol is critical. The molecular weight is conveniently from 10,000 to 500,000. Commercially available polyvinyl alcohol having a nominal molecular weight of 125,000 and 88% hydrolysed is very suitable.

### (2) Copolymers containing vinyl alcohol units.

The choice of comonomer and the amount thereof in the copolymer should be such that the copolymer is water-soluble or dispersible. Preferred comonomers for use in these copolymers are acrylic and methacrylic monomers, such as methyl acrylate and methyl methacrylate. As indicated, the copolymer should contain a major proportion of vinyl alcohol units and preferably contains at least 80% by weight of such units. A preferred copolymer comprises 95% by weight of vinyl alcohol units and 5% by weight of methyl methacrylate units.

### (3)(a) and (b) Guar gum and modified guar gums.

Any of the commercially available materials can be used.

### (4) Carboxymethyl cellulose and derivatives thereof.

Any of the commercially available materials can be used. A preferred material is available under the Trade Mark "Blanose" from Aqualon Company.

### (5) Carrageenan polymers

The iota- and kappa-forms of such polymers should be used. Subject to this limitation, any of the commercially available materials can be used, a preferred such material being that supplied under the Trade Mark "Gelcarin" by FMC Corporation.

### (6) Alginic acid polymers

Alginic acid and sodium alginate are available from a number of sources including, for example, Aldrich Chemical Company.

### (7) Polyacrylic and methacrylic acids and polymers containing pendant carboxylic acid groups.

These polymers typically have molecular weights of from 3500 to 1,000,000 and are available from a number of sources. A suitable polyacrylic acid is, for example, that supplied under the Trade Mark "Versicol" by Allied Colloids and polymethacrylic acid is available, as a 20% aqueous solution, from BDH Limited.

Polymers containing a plurality of pendant carboxylic acid groups can be prepared, for example, from copolymers containing maleic anhydride by the hydrolysis or alcoholysis of such copolymers. A suitable maleic anhydride copolymer is, for example, "Gantrez 901" (Trade Mark) supplied by G.A.F.

### (8) Polystyrene sulphonic acid

Any of the commercially available materials can be used. One such material is that supplied under the Trade Mark "Flexan 130" by National Adhesives & Resins.

### (9) Polyethylene oxide

Any of the commercially available materials can be used. One such material is that supplied under the trade mark "Polyox" by Union Carbide. This material may have a molecular weight from 400 to 300,000.

Congo red, which may be used as a curing agent for polymers of types (1), (2) and (3)(a) and (b), is the compound, sodium diphenyldiazo-bis- -naphthylamine sulphonate; it is a well known acid/alkali indicator. The cross-linking reaction with Congo red is not so fast as it is when borax is used, but its speed is adequate for the intended purpose.

Substantially any polyvalent metal salt may be used as the curing agent for polymers of types (3)(b) and (4)-(8). Stable, non-hygroscopic salts of calcium, magnesium, zinc, aluminium, zirconium and iron are preferably used, such as aluminium and zirconium chlorohydrate, mixtures of these chlorohydrates, aluminium acetate, and ferric acetate.

Suitable multifunctional carboxylic acids for use as curing agents for polymers of type (9) are, for example, polyacrylic acid, phthalic acid, succinic acid and their salts.

The solidified mass of the curing agent is preferably a pressed tablet of the material and preferably contains a suitable amount, say 10% by weight, of a conventional tabletting aid, such as magnesium stearate or stearyl alcohol. The solid mass of curing agent may be adhesively secured to the holder in which it is mounted.

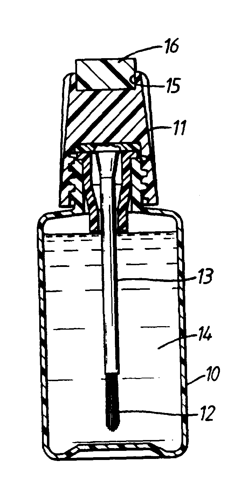

In order that the invention may be more fully understood, a preferred embodiment of correction fluid system will now be described, by way of example, with reference to the single Figure of the accompanying drawing which is an axial section through a correction fluid package.

The correction fluid package comprises a container 10 for the correction fluid having a removable screw cap 11 on the inside of which a brush 12 is mounted by means of a handle 13. Correction fluid 14 according to the invention is contained in the container 10.

The outside of the cap 11 is provided with a recess 15 in which a block 16 of solid curing agent is adhesively secured.

To use this correction fluid package, the closed container is shaken, the cap is then unscrewed and the fluid is applied where it is required by means of the brush, all in conventional manner. When the desired area has been covered with the fluid, the cap is replaced and screwed on the container. The closed container is then inverted and the block 16 is pressed on the painted area, the block being lifted, moved and applied again until the whole of the area has been treated. As soon as this has been done, it will be found that the paint has hardened and can be typed or written over.

Whilst the block 16 of the solid curing agent is shown in the drawing as having a flat surface, in another embodiment the block is oblong in cross-section and has an arcuate surface along its long dimension so that the block may be rocked over the surface to be treated.

In another embodiment of the correction fluid package, the block of curing agent is not mounted fixedly on the container cap as just described, but is shaped as a solid cylinder and is mounted on an axle about which it can freely rotate, the axle being mounted in the cap at right angles to the axis thereof. It will be understood that this arrangement will require a somewhat deeper recess 15 than that shown in the accompanying drawing.

In use the cylinder is rolled over the painted area. This makes the contacting of the coated area by the curing agent particularly simple.

The following examples of correction fluid compositions, in which all percentages are by weight, are given by way of illustration only:

### Example 1

The following composition containing polyvinyl alcohol as the polymeric binder was made up:

| | |
|---|---|
| Titanium dioxide | 50% |
| Polyvinyl alcohol (MW. about 125000; 88% hydrolysed) | 1% |
| Water | 49% |

The composition was applied to markings on paper to obscure the latter using a conventional brush.

A solid mass of borax containing 10% of stearyl alcohol was pressed on the liquid coating as soon as it had been applied and caused the coating to solidify substantially instantaneously. The solidified coating could be written or typed on immediately.

### Example 2

The following composition containing sodium alginate as the polymeric binder was made up:

| | |
|---|---|
| Titanium dioxide | 50% |
| Sodium alginate | 1% |
| Water | 49% |

The composition was used to obscure markings on paper in the same way as that described in Example 1.

A solid mass of calcium acetate containing 10% of stearyl alcohol was pressed on the liquid coating as soon as it had been applied and caused the coating to solidify substantially instantaneously. The solidified coating could be written or typed on immediately.

### Example 3

The following composition containing carboxymethylcellulose as the polymeric binder was made up:

| | |
|---|---|
| Titanium dioxide | 49% |
| Carboxy methylcellulose (Blanose 7LC) | 1% |
| Water | 49.4% |
| Orotan 731 | 0.3% |
| Propylene glycol | 0.3% |

"Orotan 731" (Trade Mark) is a wetting agent; the propylene glycol acted as a plasticiser for the polymeric binder.

The composition was applied to markings on paper to obscure the latter using a conventional brush. A solid mass of mixed aluminium and zirconium chlorohydrates was pressed on the liquid coating of the composition as soon as it had been applied and caused the coating to solidify substantially instantaneously. The solidified coating could be written or typed on immediately.

### Example 4

The following composition containing a carrageenan polymer as the polymeric binder was made up:

| | |
|---|---|
| Titanium dioxide | 50% |
| Carrageenan (Gelcarin GP 374) | 0.3% |
| Water | 49% |
| Orotan 731 | 0.4% |
| Propylene glycol | 0.3% |

This composition was used to obscure markings on paper in the same way as that described in Example 3; similar results were obtained.

Other embodiments are within the following claims. For example, the curing agent can be in liquid form when applied to a film of the correction fluid.

## Claims

1. A correction fluid system which comprises
(a) a correction fluid comprising an aqueous dispersion of an opacifying agent and a water-soluble or dispersible curable polymer as a binder for the opacifying agent, and separately therefrom (as herein defined),
(b) a curing agent which can cure the polymeric binder so as to solidify a coating of the correction fluid within 60 seconds or less of the initiation of curing; wherein the polymeric binder is selected from:
(1) polyvinyl alcohol,
(2) copolymers comprising a major proportion of vinyl alcohol units and a minor proportion of units of a copolymerisable monomer,
(3) (a) guar gum and
(b) modified guar gums,
(4) carboxymethyl cellulose and derivatives thereof,
(5) iota- or kappa- carrageenan polymers,
(6) alginic acid polymers,
(7) polymers based on acrylic or methacrylic acid or polymers containing a plurality of pendant carboxylic acid groups,
(8) polystyrene sulphonic acid, and
(9) polyethylene oxide,
and the curing agent used with said polymeric binder is selected respectively from (using the same numbering as for the polymers):
(1), (2) and (3)(a) and (b): borax or other salt of boric acid, Congo red, or sodium silicate,
(3)(b) and (4)-(8) inclusive: a polyvalent metal salt, and
(9): a multifunctional carboxylic acid.

2. A correction fluid system according to claim 1, which also comprises means for applying the correction fluid to a surface to be coated therewith, and in which the curing agent is in the form of a solid mass mounted in a holder which can be handled.

3. A correction fluid system according to claim 2, in which the solid mass of curing agent is a pressed tablet of said agent.

4. A correction fluid system according to claim 2 or 3, in which the correction fluid is contained in a container with a removable closure and the solid mass of the curing agent is mounted on the outside of said container or said closure.

5. A correction fluid system according to claim 1, 2, 3 or 4, in which the polymer of type (2) is a copolymer comprising 95% by weight of vinyl alcohol units and 5% by weight of methyl methacrylate units.

6. A correction fluid system according to any of claims 1 to 5, in which the correction fluid comprises, by weight, about 50% of the opacifying agent, from 0.2 to 8% of the polymeric binder, and the balance water.

7. A correction fluid system according to any of claims 1 to 6, in which the opacifying agent is titanium dioxide.

8. A correction fluid system according to any of claims 1 to 5, which also comprises a dispersant.

9. A method of obscuring markings on a surface, which comprises applying a coating of a correction fluid comprising an aqueous dispersion of an opacifying agent and a water-soluble or dispersible curable polymeric binder therefor, to that part of the marked surface it is wished to obscure, and then exposing the liquid coating to a curing agent which can cure the polymeric binder so as to solidify the coating within 60 seconds or less of the initiation of curing; wherein the polymeric binder is selected from the group consisting of:
(1) polyvinyl alcohol,
(2) copolymers comprising a major proportion of vinyl alcohol units and a minor proportion of units of a copolymerisable monomer,
(3) (a) guar gum and
(b) modified guar gums,
(4) carboxymethyl cellulose and derivatives thereof,
(5) iota- and kappa- carrageenan polymers,
(6) alginic acid polymers,
(7) polymers based on acrylic or methacrylic acid or polymers containing a plurality of pendant carboxylic acid groups,
(8) polystyrene sulphonic acid, and
(9) polyethylene oxide;
and said curing agent is selected respectively from the group consisting of (using the same numbering as for the polymers):
(1), (2) and (3)(a) and (b): borax or other salt of boric acid, Congo red, or sodium silicate,
(3)(b) and (4)-(8) inclusive: a polyvalent metal salt, and
(9): a multifunctional carboxylic acid.

10. A method according to claim 9, in which the curing agent is in the form of a solid mass which is pressed onto or rocked or rolled over the coated area.

11. A method according to claim 10, in which the curing agent is in the form of a pressed tablet.

## Patentansprüche

1. Korrekturflüssigkeitssystem, bestehend aus
(a) einer Korrekturflüssigkeit, bestehend aus einer wässrigen Dispersion eines deckfähigkeitsvermittelnden Mittels und eines wasserlöslichen oder dispergierbaren aushärtbaren Polymers als Bindemittel für das deckfähigkeitsvermittelnde Mittel und getrennt davon (wie hierin definiert)
(b) einem Härtemittel, das in der Lage ist, das polymere Bindemittel derart auszuhärten, daß eine Beschichtung der Korrekturflüssigkeit innerhalb von 60 Sekunden oder weniger vom Beginn des Aushärtungsprozesses an verfestigt wird, wobei das polymere Bindemittel unter folgenden Substanzen ausgewählt wird:
1) Polyvinylalkohol,
(2) Copolymeren, größerenteils bestehend aus Vinylalkoholeinheiten und kleinerenteils aus Einheiten eines copolymerisierbaren Monomers,
(3) (a) Guaran und
(b) modifizierten Guaranen,
(4) Carboxymethylcellulose und Derivaten derselben,
(5) Iota- oder Kappa-Carrageenanpolymeren
(6) Alginsäurepolymeren
(7) Polymeren auf der Basis von Acrylsäure oder Methacrylsäure oder mehrere Carbonsäure-Seitengruppen enthaltenden Polymeren,
(8) Polystyrolsulfonsäure und
(9) Polyethylenoxid
und das zusammen mit dem polymeren Bindemittel verwendete Härtemittel jeweils unter folgenden Substanzen (unter Anwendung derselben Nummerierung wie für die Polymere) ausgewählt wird:
(1), (2) und (3) (a) und (b): Borax oder einem anderen Borsäuresalz, Kongorot oder Natriumsilikat,
(3) (b) und (4) bis einschließlich (8): einem mehrwertigen Metallsalz und
(9): einer multifunktionellen Carbonsäure.

2. Korrekturflüssigkeitssystem nach Anspruch 1, welches des weiteren Hilfsmittel zum Aufbringen der Korrekturflüssigkeit auf eine damit beschichtende Oberfläche umfaßt und worin sich das Härtemittel in Form einer in einer Haltevorrichtung, die sich handhaben läßt, festgehaltenen Feststoffmasse befindet.

3. Korrekturflüssigkeitssystem nach Anspruch 2, worin die Feststoffmasse des Härtemittels als verpreßte Tablette des Mittels vorliegt.

4. Korrekturflüssigkeitssystem nach Anspruch 2 oder 3, worin die Korrekturflüssigkeit in einem Behälter mit entfernbarem Verschluß enthalten ist und die Feststoffmasse des Härtemittels an der Außenseite des Behälter oder des Verschlußes befestigt ist.

5. Korrekturflüssigkeitssystem nach Anspruch 1, 2, 3 oder 4, wobei der Polymer des Typs (2) ein zu 95 Gew.-% aus Vinylalkoholeinheiten und zu 5 Gew.-% aus Methylmethacrylateinheiten bestehendes Copolymer darstellt.

6. Korrekturflüssigkeitssystem nach einem der Ansprüche 1 bis 5, wobei die Korrekturflüssigkeit zu ca. 50% aus dem deckfähigkeitsvermittelnden Mittel, zu 0,2 bis 8% aus dem polymeren Bindemittel, jeweils auf das Gewicht bezogen, besteht, und der Rest Wasser ist.

7. Korrekturflüssigkeitssystem nach einem der Ansprüche 1 bis 6, wobei das deckfähigkeitsvermittelnde Mittel Titandioxid ist.

8. Korrekturflüssigkeitssystem nach einem der Ansprüche 1 bis 5, welches außerdem ein Dispergierhilfmittel umfaßt.

9. Methode zum Verdecken der Markierungen auf einer Oberfläche, bestehend aus dem Auftragen einer Beschichtung aus Korrekturflüssigkeit, bestehend aus einer wässrigen Dispersion eines deckfähigkeitsvermittelnden Mittels und eines wasserlöslichen oder dispergierbaren aushärtbaren polymeren Bindemittels dafür, auf denjenigen Teil der markierten Oberfläche, welcher verdeckt werden soll, und dem darauffolgenden Aussetzen der flüssigen Beschichtung an ein Härtemittel, das in der Lage ist, das polymere Bindemittel derart auszuhärten, daß die Beschichtung innerhalb von 60 Sekunden oder weniger vom Beginn des Aushärtungsprozesses an verfestigt wird, wobei das polymere Bindemittel aus der aus folgenden Substanzen bestehenden Gruppe ausgewählt wird:
1) Polyvinylalkohol,
(2) Copolymeren, größerenteils bestehend aus Vinylalkoholeinheiten und kleinerenteils aus Einheiten eines copolymerisierbaren Monomers,
(3) (a) Guaran und
(b) modifizierten Guaranen,
(4) Carboxymethylcellulose und Derivaten derselben,
(5) Iota- oder Kappa-Carrageenanpolymeren
(6) Alginsäurepolymeren
(7) Polymeren auf der Basis von Acrylsäure oder Methacrylsäure oder mehrere Carbonsäure-Seitengruppen enthaltenden Polymeren,
(8) Polystyrolsulfonsäure und
(9) Polyethylenoxid
und das Härtemittel jeweils aus der aus folgenden Substanzen bestehenden Gruppe (unter Anwendung derselben Nummerierung wie für die Polymere) ausgewählt wird:
(1), (2) und (3) (a) und (b): Borax oder einem anderen Borsäuresalz, Kongorot oder Natriumsilikat,
(3)(b) und (4) bis einschließlich (8): einem mehrwertigen Metallsalz und
(9): einer multifunktionellen Carbonsäure.

10. Methode nach Anspruch 9, wobei das Härtemittel in Form einer Feststoffmasse vorliegt, welche auf den beschichteten Bereich gepreßt oder durch Hin- und Herbewegen aufgebracht oder aufgewalzt wird.

11. Methode nach Anspruch 10, wobei das Härtemittel in Form einer gepreßten Tablette vorliegt.

## Revendications

1. Un système à liquide correcteur qui comporte:
(a) un liquide correcteur composé d'une dispersion aqueuse d'un agent opacifiant et d'un polymère durcissable soluble dans l'eau ou dispersible, qui sert de liant à l'agent opacifiant et qui en est séparé (comme défini ici).
(b) un agent durcisseur qui peut durcir le polymère liant de manière à solidifier une couche du liquide correcteur en 60 secondes ou moins à partir du début du séchage; dans lequel le polymère liant est sélectionné parmi:
(1) l'alcool polyvinylique,
(2) copolymères comportant une proportion majeure d'unités d'alcool vinylique et une proportion mineure d'unités d'un monomère copolymérisable,
(3) (a) guar et
(b) guars modifiés,
(4) carboxyméthylcellulose et ses dérivés,
(5) polymères iota- ou kappa- carrageenins,
(6) copolymères de l'acide alginique,
(7) polymères basés sur l'acide acrylique ou méthacrylique ou polymères contenant une pluralité de groupes d'acides carboxyliques attachés,
(8) acide sulfonique polystyrénique et
(9) oxyde de polyéthylène,
et l'agent durcisseur utilisé avec ledit polymère liant est sélectionné respectivement à partir de (en utilisant la même numérotation que pour les polymères):
(1), (2) et (3)(a) et (b): borax ou autre sel de l'acide borique, rouge Congo, ou silicate de sodium,
(3)(b) et (4)-(8) inclus: un sel de métal polyvalent, et
(9): un acide carboxylique multifonctionnel.

2. Un système à fluide correcteur selon la revendication 1, qui comporte également un moyen d'application du liquide correcteur à une surface devant être enrobée par ledit système, et dans lequel l'agent durcisseur prend la forme d'une masse solide montée dans un support pouvant être manipulé.

3. Un système à fluide correcteur selon la revendication 2, dans lequel la masse solide d'agent durcisseur est un comprimé du dit agent.

4. Un système à liquide correcteur selon la revendication 2 ou 3, dans lequel le liquide correcteur est renfermé dans un récipient doté d'une fermeture amovible et la masse solide de l'agent durcisseur est montée à l'extérieur du dit récipient ou de ladite fermeture.

5. Un système à liquide correcteur selon la revendication 1, 2, 3 ou 4, dans lequel le polymère du type (2) est un copolymère comportant 95% en poids d'unités d'alcool vinylique et 5% en poids d'unités de méthalycrate de méthyle.

6. Un système à liquide correcteur selon l'une quelconque des revendications 1 à 5, dans lequel le liquide correcteur comporte, en poids, 50% environ de l'agent opacifiant, entre 0,2 et 8% du polymère liant, le complément étant constitué par de l'eau.

7. Un système à liquide correcteur selon la revendication 1 à 6, dans lequel l'opacifiant est du blanc de titane.

8. Un système à liquide correcteur selon l'une quelconque des revendications 1 à 5, qui comprend également un dispersant.

9. Une méthode de dissimulation de marques sur une surface, qui regroupe l'application d'une couche d'un liquide correcteur comportant une dispersion aqueuse d'un agent opacifiant et un polymère liant durcissable soluble à l'eau ou dispersible pour cet agent, à la partie de la surface marquée que l'on souhaite dissimuler, puis l'exposition de la couche liquide à un agent durcisseur qui peut durcir le polymère liant de manière à solidifier la couche liquide en 60 secondes ou moins à partir du début du durcissement; système dans lequel le polymère liant est sélectionné à partir du groupe comportant:
(1) alcool polvinylique,
(2) copolymères comportant une proportion majeure d'unités d'alcool vinylique et une proportion mineure d'unités d'un monomère copolymérisable,
(3) (a) guar et
(b) pars modifiés,
(4) carboxyméthylcellulose et ses dérivés,
(5) polymères iota- et kappa- carrageenins,
(6) polymères d'acide alginique,
(7) polymères basés sur l'acide acrylique ou méthacrylique ou polymères contenant une pluralité de groupes d'acides carboxyliques attachés,
(8) acide sulfoné de polystyrène, et
(9) oxyde de polyéthylène;
et ledit agent durcisseur est sélectionné respectivement à partir du groupe comportant (en utilisant la même numérotation que pour les polymères):
(1), (2) et (3)(a) et (b): borax ou autre sel de l'acide borique, rouge Congo, ou silicate de sodium,
(3)(b) et (4)-(8) inclus: un sel de métal polyvalent, et
(9) un acide carboxylique multifonctionnel.

10. Une méthode selon la revendication 9, dans laquelle l'agent durcisseur prend la forme d'une masse solide qui est pressée, basculée ou roulée au-dessus de la surface enduite.

11. Une méthode selon la revendication 10, dans laquelle l'agent durcisseur prend la forme d'un comprimé.
